# EUROPEAN PATENT SPECIFICATION

(11) **EP 2 727 829 B1**
(45) Date of publication and mention of the grant of the patent: **05.09.2018**
(21) Application number: 13190099.5
(22) Date of filing: 24.10.2013
(51) Int. Cl.: B64C 3/56, B64C 23/06

(54) **Wing fold controller**
Steuerung einer Flügelendenanklappvorrichtung
Système de contrôle pour le pliage des bouts d'aile

(30) Priority: 30.10.2012 US 201261720338 P; 10.09.2013 US 201314022622; 30.10.2012 US 201213664416
(43) Date of publication of application: 07.05.2014
(60) Divisional application: 18184756.7
(73) Proprietor: The Boeing Company, Chicago, IL 60606-1596 (US)
(72) Inventor: Lassen, Matthew August, Chicago, IL Illinois 60606-2016 (US); Douglas, Chad Richard, Chicago, IL Illinois 60606-2016 (US); Jones, Kelly Thomas, Chicago, IL Illinois 60606-2016 (US); Kenning, Terence Boyd, Chicago, IL Illinois 60606-2016 (US)
(74) Representative: Boult Wade Tennant LLP

(56) References cited:
- EP-A1- 1 375 342
- WO-A2-2011/051699
- US-A- 5 381 986

## Description

### FIELD OF THE DISCLOSURE

This disclosure relates to systems and methods for controlling wings, and more specifically, to systems and methods for controlling wingtips to enhance aircraft performance and fuel efficiency.

### BACKGROUND OF THE DISCLOSURE

In the commercial air transport industry, it is desirable to design aircraft configurations that yield reduced fuel burn per seat-mile, as fuel burn per seat-mile is a measure of fuel efficiency. Efficient aircraft configurations are ever more important as fuel costs continue to increase. Aircraft aerodynamic drag and fuel burn are generally reduced as the aspect ratio of the aircraft wing increases. Similarly, operating larger aircraft which carry more passengers and payload is generally more efficient between two destinations than flying several trips with smaller aircraft. Thus, larger aircraft and aircraft with longer wingspans tend to be more efficient. However, taxiway spacing and gate locations for most airports were established without providing adequate spacing for aircraft with the longer wingspans that may be produced with today's technology.

Some attempts have been made to improve aircraft wing efficiency without adding wingspan. Winglets extending vertically from the wingtips have improved aircraft fuel efficiency without significantly increasing wingspan. However, the efficiency added by winglets may not be as beneficial as that provided by extending the wingspan.

Therefore, a need exists to have a method and apparatus that takes into account at least some of the issues discussed above, as well as other possible issues.

US 5,381,986 discloses a folding wingtip system.

### SUMMARY

The illustrative embodiments may provide a method of controlling folding a wing. The method may include: receiving a status of at least one of an aircraft, and controlling, via a wing fold system of the aircraft, folding the wing. The method also may include receiving an automated command by the wing fold controller of the aircraft in response to receiving the status. The method also may include operating the wing fold system of the aircraft by the wing fold controller based on the automated command and the status. The method also may include transitioning a wingtip of a wing of the aircraft to one of a flight position of the wing and a folded position of the wing by an actuator of the wing fold system in response to operating the wing fold system by the wing fold controller.

The illustrative embodiments may also provide for an apparatus to control a wing fold system of a wing of an aircraft. The apparatus may include a wing fold controller configured to receive a status of at least one of the aircraft or the wing fold system of the aircraft. The apparatus also may include the wing fold controller configured to receive an automated command based on receiving the status. The apparatus also may include the wing fold controller configured to operate the wing fold system of the aircraft based on the command and the status. The apparatus also may include an actuator configured to transition a wingtip of a wing of the aircraft to one of a flight position of the wing and a folded position of the wing in response to operating the wing fold system by the wing fold controller.

The illustrative embodiments may also provide for an aircraft. The aircraft may include a fuselage configured for flight and a computer. The computer may include a bus, a processor connected to the bus, and a memory connected to the bus, the memory storing a program code which, when executed by the processor, performs a computer-implemented method. The program code may include program code for receiving a status of at least one of an aircraft and a wing fold system of the aircraft by the wing fold controller of the aircraft. The program code also may include program code for receiving an automated command by the wing fold controller of the aircraft in response to receiving the status. The program code also may include program code for performing, using the processor, operating the wing fold system of the aircraft by the wing fold controller based on the command and the status. The program code also may include program code for performing, using the processor, transitioning a wingtip of a wing of the aircraft to one of a flight position of the wing and a folded position of the wing by an actuator of the wing fold system in response to operating the wing fold system by the wing fold controller.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a diagram of an aircraft embodying a wing fold controller in accordance with an illustrative embodiment;
**Figure 2** is a diagram of an aircraft embodying a wing fold controller in accordance with an illustrative embodiment;
**Figures 3A** **and** **3B** are a flowchart of a method of folding a wing via a wing fold controller in accordance with an illustrative embodiment;
**Figure 4** is a block diagram of an aircraft embodying a wing fold controller in accordance with an illustrative embodiment;
**Figure 5** is a block diagram of a wing fold system in accordance with an illustrative embodiment;
**Figure 6** is a diagram of a wing embodying a wing fold system in accordance with an illustrative embodiment;
**Figures 7A** and **7B** are a flowchart of a method of a wing fold controller in accordance with an illustrative embodiment;
**Figure 8** is a flowchart of a method of manufacturing a commercial aircraft;
**Figure 9** is a block diagram of a commercial aircraft; and
**Figure 10** is an illustration of a data processing system, in accordance with an illustrative embodiment.

### DETAILED DESCRIPTION

Illustrative embodiments may recognize and take into account one or more different considerations. For example, having an aircraft that may benefit from a long wingspan in flight, while being able to reduce the wingspan when operating at an airport such as but not limited to International Civil Aviation Organization "code E" or Federal Aviation Administration "code V" airports, may be desirable with respect to increasing the flexibility of where an aircraft may operate. In particular, by being able to reduce the wingspan while on the ground, an aircraft may be able to operate at more airports than if the aircraft could not reduce its wingspan while on the ground. With the longer wingspan during flight, benefits may include fuel efficiency.

Thus, control of the wingspan of an aircraft may be advantageously achieved through the use of a wing fold controller and wing fold system. The wing fold controller receives status of the aircraft and wing fold system and also receives commands to control the state of the wing fold system. Based on the status and the commands, the wing fold controller transitions the wing fold system between a folded position and a flight position, therein controlling the wingspan of the aircraft.

The illustrative embodiments may allow for folding and extending of wingtips that is based on information about aircraft status and/or the environment around the aircraft. Folding and extending of wingtips may be automated.

Aircraft status may include, without limitation, a configuration of the aircraft, or a condition of any aircraft status that may affect any component or feature of a wing fold system. The environment around the aircraft may include, without limitation, aircraft location during preparation for takeoff or after landing, and/or structures, obstacles, or vehicles and/or weather phenomenon around the aircraft.

Architecture provided herein includes an electronic wingtip folding system that may allow for higher availability based in part on addition of redundant system components. Such components may include controllers, analog to digital converters, control lanes, control channels, and/or sensors. The system may be more adaptive to automated operation than any existing wing fold system.

The illustrative embodiments may promote more ease in modification to wingtip folding functionality. Such functionality may include modification of software code as opposed to altering mechanical hardware and kinematic interfaces. Diagnostic capability of the wingtip system may include earlier detection of vulnerable components which may reduce time of exposure to latent vulnerabilities.

The system may be less subject to dynamic mechanical feedback. The illustrative embodiments may promote greater ease in verifying functionality of the system, allowing for checks of the system for possible latent problems via automated, periodic system tests. For example, the system may verify that a moveable wingtip may be latched or locked to a fixed wingtip. The system may automatically attempt to fold the wingtip after sensing the wingtip may be in a latched and locked configuration. If the attempt is not successful in moving the wingtip system, the aircraft may be verified to be in a flightworthy condition (with regard to the wingtips). If the system is able to move the wingtip or critical parts of the system, then a crew-altering system may annunciate that the aircraft is in a non-flightworthy condition.

The illustrative embodiments may promote a reduced workload on crew. Minimal or no crew actions may be required to configure wingtips for flight or ground operations including taxiway and gate operations. Location-based alerting may also be promoted. Prior to takeoff, the system may verify that the aircraft may be in flightworthy configuration before engine thrust may be applied. After landing touchdown, the system may verify that the aircraft may be in a correct configuration for operation around the airport where reduced wingspan is required such as, without limitation, taxiway, other runway, gate, ramp, apron, and/or maintenance facility operations.

The illustrative embodiments may provide improvements over previous wing control arrangements that may require large spatial integration volume. Such previous requirements may result in increased wing loft that may cause excess drag and greater weight. Previous arrangements also may not be readily modified or optimized once their designs are finalized.

By contrast, the illustrative embodiments may provide a more electrical and optical control which may reduce component volume and allow for optimization and modification via software updates. Further, the illustrative embodiments may alleviate concerns over lightning strikes and electromagnetic effects when considering optical signal transmission. A more electric architecture may allow for easier build and maintainability of aircraft through installation of replaceable components as opposed to mechanical components that may require individual shimming and rigging.

Unless otherwise noted and where appropriate, similarly named features and elements of an embodiment of one figure of the disclosure correspond to and embody similarly named features and elements of embodiments of the other figures of the disclosure.

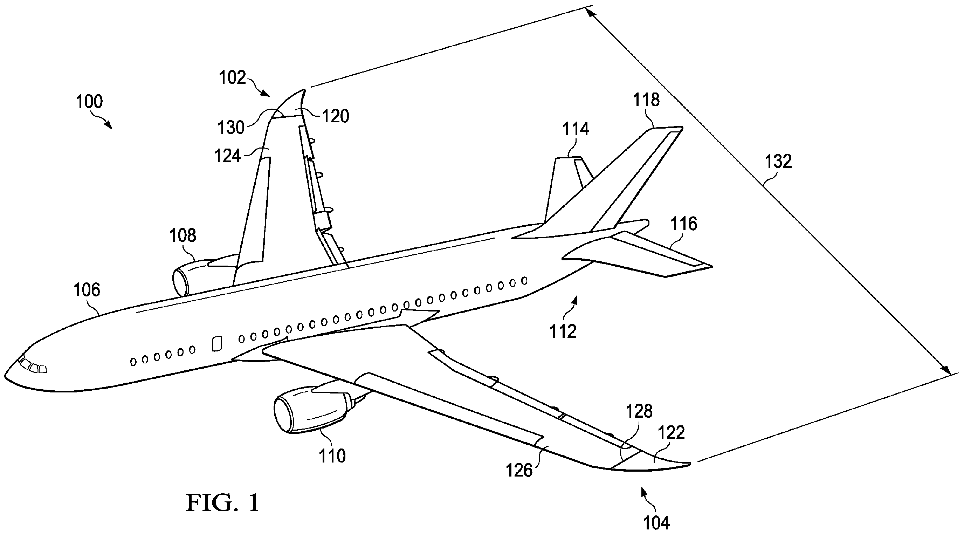

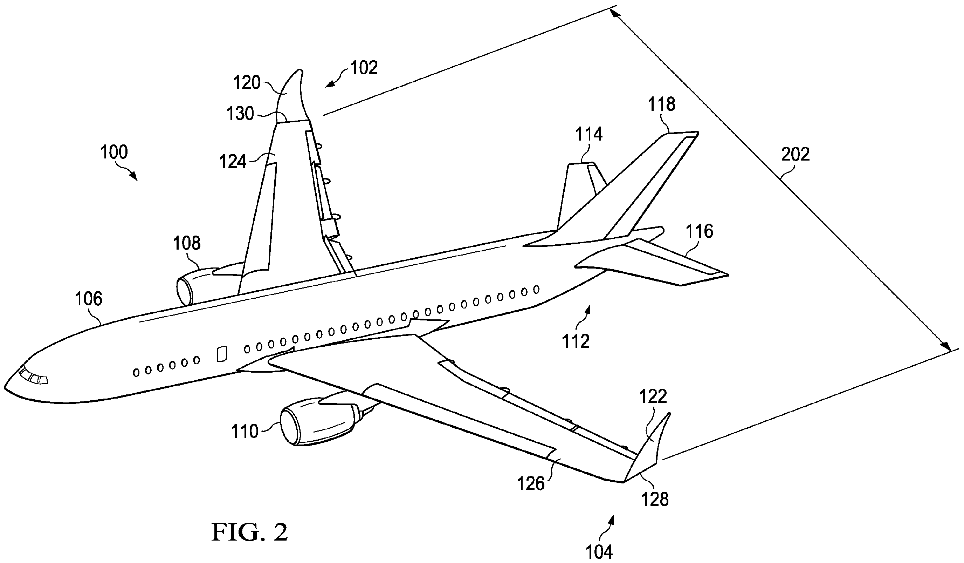

Attention is turned to the figures. **Figure 1** is a diagram of an aircraft embodying a wing fold controller in accordance with an illustrative embodiment. **Figure 2** is a diagram of an aircraft embodying a wing fold controller in accordance with an illustrative embodiment. Reference numerals used in **Figure 1** are also used in **Figure 2****.**

Aircraft **100** may be an example of an aircraft in which a wing fold system may be implemented in accordance with an illustrative embodiment. In an illustrative embodiment, aircraft **100** may include wing **102** and wing **104** attached to body **106;** engine **108** attached to wing **102;** engine **110** attached to wing **104.** **Figure 1** depicts wings **102** and **104** of aircraft **100** in a flight position, with wingspan **132.** **Figure 2** depicts wings **102** and **104** aircraft **100** in a folded position, with wingspan **202.** Wingspan **202** may be less than wingspan **132.**

Wing **102** may include fixed portion **124** and unfixed portion **120.** Fixed portion **124** may be an inboard portion of wing **102,** which may be fixed to body **106.** Similarly, wing **104** may include fixed portion **126** and unfixed portion **122.** Wing **102** may include wing fold system **130** to move unfixed portion **120** with respect to fixed portion **124.** Wing **104** may include wing fold system **128** to move unfixed portion **122** with respect to fixed portion **126.**

Body **106** has tail section **112.** Horizontal stabilizer **114,** horizontal stabilizer **116,** and vertical stabilizer **118** are attached to tail section **112** of body **106.** Wing fold system **128** and wing fold system **130** each include a latch assembly (not depicted in **Figure 1** or **Figure 2****)** in accordance with an illustrative embodiment.

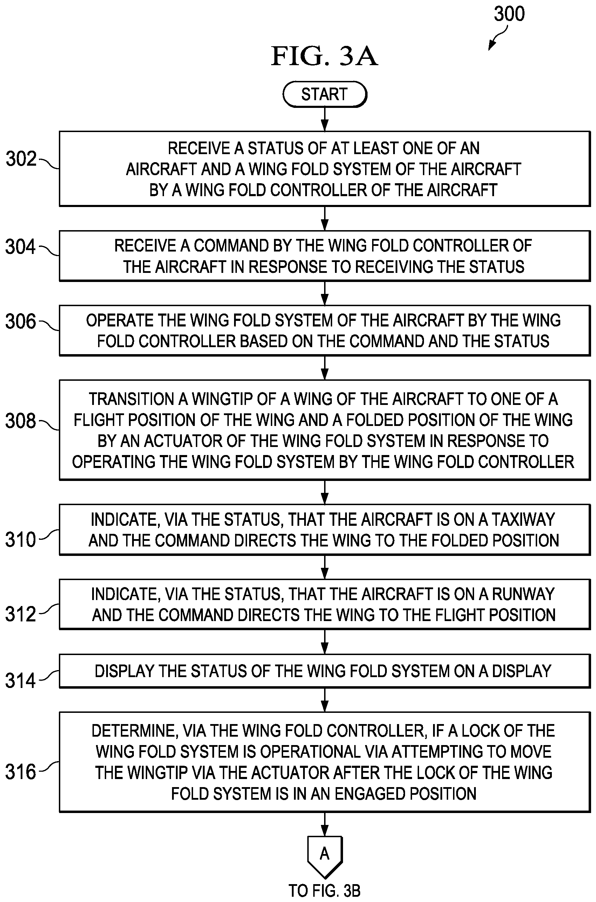

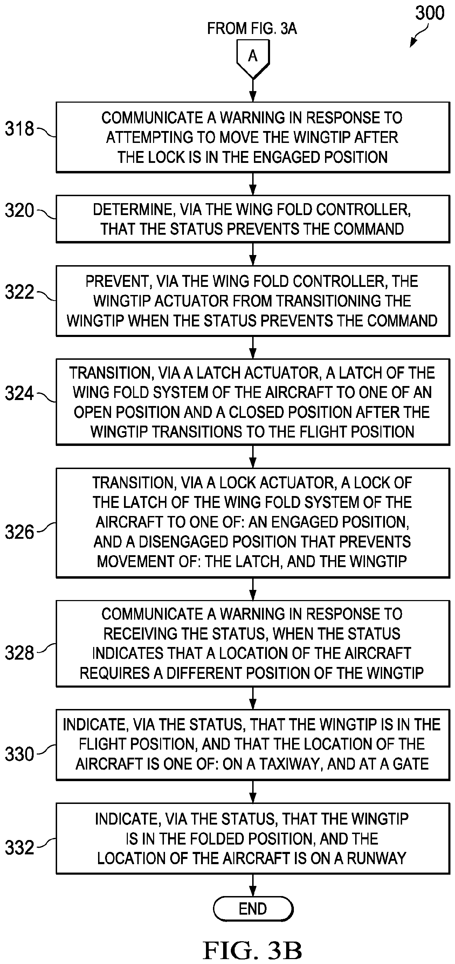

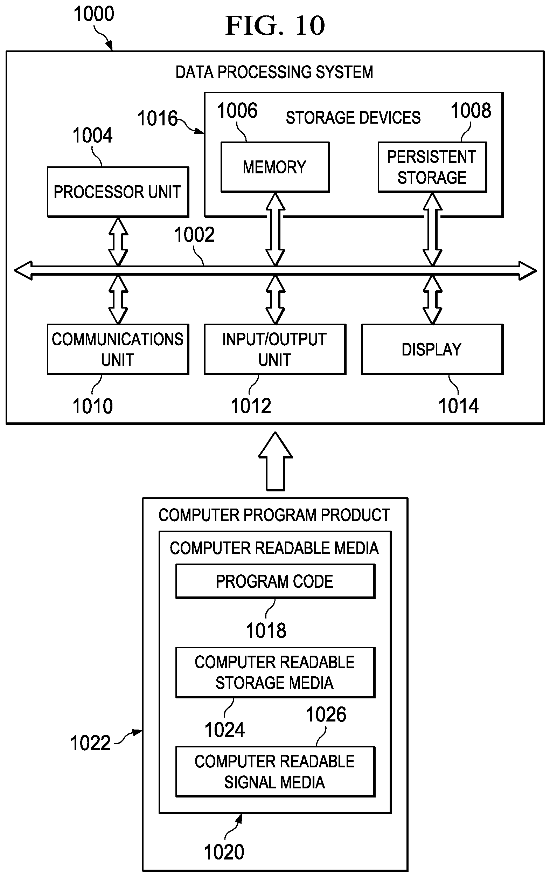

**Figures 3a** **and** **3b** are a flowchart of a method **300** of folding a wing via a wing fold controller in accordance with an illustrative embodiment. Method **300** shown in **Figure 3** may be implemented using aircraft **100** of **Figure 1** and **Figure** 2. The process shown in **Figure 3** may be implemented by a processor, such as processor unit **1004** of **Figure 10****.** The process shown in **Figure 3** may be a variation of the processes shown in **Figure 1** and **Figure 2** and **Figure 4** through **Figure 10****.** Although the operations presented in **Figure 3** are described as being performed by a "process," the operations are being performed by at least one tangible processor or using one or more physical devices, as described elsewhere herein. The term "process" also may include computer instructions stored on a non-transitory computer readable storage medium.

Method **300** may begin as the process may receive a status of at least one of an aircraft and a wing fold system of the aircraft by the wing fold controller of the aircraft (operation **302**). The status may be displayed on a display.

Next, the process may receive a command by the wing fold controller of the aircraft in response to receiving the status (operation **304**). The command may be an automated command.

Next, the process may operate the wing fold system of the aircraft by the wing fold controller based on the command and the status (operation **306**). Next, the process may transition a wingtip of a wing of the aircraft to one of a flight position of the wing and a folded position of the wing by an actuator of the wing fold system in response to operating the wing fold system by the wing fold controller (operation **308**).

Next, the process may indicate, via the status, that the aircraft may be on a taxiway and the command directs the wing to the folded position (operation **310**). Alternatively, the process may indicate, via the status, that the aircraft may be rolling toward a taxiway and the command directs the wing to the folded position.

Next, the process may indicate, via the status, that the aircraft may be on a runway and the command directs the wing to the flight position (operation **312**). Alternatively, the process may indicate, via the status, that the aircraft may be rolling toward a runway and the command directs the wing to the flight position. Next, the process may display the status of the wing fold system on a display (operation **314**).

Next, the process may determine, via the wing fold controller, if a lock of the wing fold system may be operational via attempting to move the wingtip via the actuator after the lock of the wing fold system may be in an engaged position (operation **316**). Operation 316 may also be a test of the operation of a latch of the wing fold system.

Next, the process may communicate a warning in response to attempting to move the wingtip after the lock may be in the engaged position (operation **318**). Next, the process may determine, via the wing fold controller, that the status prevents the command (operation **320**).

Next, the process may prevent, via the wing fold controller, the wingtip actuator from transitioning the wingtip when the status prevents the command (operation 322). Next, the process may transition, via a latch actuator, a latch of the wing fold system of the aircraft to one of an open position and a closed position after the wingtip transitions to the flight position (operation **324**). Next, the process may transition, via a lock actuator, a lock of the latch of the wing fold system of the aircraft to one of: an engaged position, and a disengaged position that prevents movement of: the latch, and the wingtip (operation **326)** .

Next, the process may communicate a warning in response to receiving the status, when the status indicates that a location of the aircraft requires a different position of the wingtip (operation **328**). Next, the process may indicate, via the status, that the wingtip may be in the flight position, and that the location of the aircraft may be one of: on a taxiway, and at a gate (operation **330**). Alternatively, the aircraft location may be inside a building or in proximity to a vehicle or obstacle that the wing fold controller may predict may contact the wingtip. Further, the aircraft may be rolling toward a taxiway, a gate, a building, a vehicle or obstacle that the wing fold controller may predict may contact the wingtip.

Next, the process may indicate, via the status, that the wingtip may be in the folded position, and the location of the aircraft may be on a runway (operation **332**). Alternatively, the aircraft location may be rolling toward a runway.

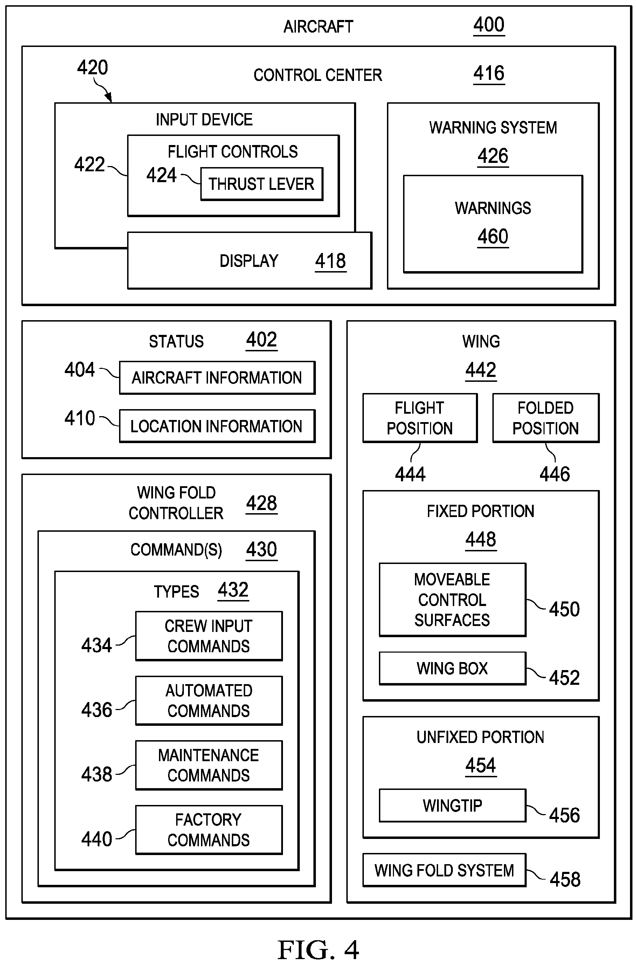

**Figure 4** is a block diagram of an aircraft embodying a wing fold controller in accordance with an illustrative embodiment. Aircraft **400** may be an illustrative embodiment of aircraft **100** depicted in **Figure 1** and **Figure 2****.** Aircraft **400** may include several features, elements, and components, including: status **402,** control center **416,** wing fold controller **428,** and wing **442.**

Status **402** may include aircraft information **404** and location information **410.** Aircraft information **404** may include information related to aircraft **400** that may be used by wing fold controller **428** to control wing fold system **458.** Aircraft information **404** may indicate a status including, without limitation, one or more of: whether aircraft **400** may be in-flight, whether aircraft **400** may be standing, whether aircraft **400** may be taxiing, whether aircraft **400** may be performing a takeoff, whether aircraft **400** may be performing an initial climb, whether aircraft **400** may be en route, whether aircraft **400** may be maneuvering, whether aircraft **400** may be performing an approach, whether aircraft **400** may be landing, a speed of aircraft **400,** a wind speed of air surrounding aircraft **400,** a status of an aircraft system, and/or whether aircraft **400** may be in a flightworthy configuration. An aircraft that may be standing may be aircraft **400** that may be on the ground, but the location information **410** of aircraft **400** may not be changing. An aircraft system that may be used by wing fold controller may include, without limitation, a hydraulic system, an electrical system, wiring, an actuator, and a controller.

Location information **410** may include information related to a position of aircraft **400** relative to its surroundings that may be used by wing fold controller **428** to control wing fold system **458.** Surroundings related to aircraft **400** may include, without limitation: a taxiway, an apron, a de-icing station, a run-up pad, a runway, a gate, a maintenance facility, any obstacle, and/or any vehicle. Information on relative surroundings may be provided by, without limitation, an onboard database, datalinked information, Global Positioning System (GPS) derived information, radar, and/or Automatic Dependent Surveillance-Broadcast (ADS-B) derived information. Location information **410** may indicate and may be used to determine if wing **442** may be required to be in folded position **446,** such as when aircraft **400** may be at a point on an airport, such as on a taxiway or at a gate, that may require a limited wingspan.

Control center **416** may be a cockpit in aircraft **100.** Alternatively, control center **416** may be outside aircraft **100** and connected via data link to aircraft **100.** Without limitation, control center **416** may include a maintenance facility or computer system. Control center **416** may contain input device **420,** display **418,** and warning system **426.** Input device **420** may be used to control and operate aircraft **100.** Without limitation, input device **420** may be include a switch, screen or device in a cockpit, a controller or other processor in or linked to aircraft **400,** or by an aircraft operator in control center **416.** An aircraft operator may be a crew member in a cockpit, or another operator, which may be a processor in control center **416.**

Display **418** may display any portion of status **402** to aircraft **400.** Display **418** may be viewed by an operator of aircraft **400.** Display **418** may be one of several displays in control center **416** that are of any type, size, or shape to display information to crew members. Display **418** may be a touch sensitive display to allow for inputs from a crew member to control aircraft **400** via display **418.**

Input device **420** may control operation of aircraft **400** and allow command(s) **430** to be sent to wing fold controller **428.** Input device **420** may include any number of flight controls **422** that control flight of aircraft **400.** Flight controls **422** may include thrust lever **424** that controls thrust of aircraft **400.** Input device **420** may include display **418** when display **418** allows for inputs.

Warning system **426** of aircraft **400** may issue warnings **460** to control center **416** or to associated facilities. Without limitation, associated facilities may include: air traffic control facilities, airline dispatch facilities, or airline or manufacturer maintenance facilities. Warnings **460** may include transmissions to an airport control tower, to nearby aircraft, to a dispatcher for aircraft **400,** to a maintenance monitor for aircraft **400,** and/or to other systems outside aircraft **400** that monitor aircraft **400.** Warnings **460** may indicate when wingtip **456** of wing **442** may be not in a proper position based on status **402** of aircraft **400.** Warnings **460** may also indicate when wing fold system **458** may be not properly functioning. Warnings **460** may be communicated visually, mechanically, electronically, and/or audibly. Warnings **460** may be displayed via display **418.** Warnings **460** may be integrated into existing takeoff or landing configuration warning systems. Warnings **460** may be a single warning or a plurality of warnings. The single warning or the plurality of warnings may be sent to a single recipient or to multiple recipients.

When thrust lever **424** of aircraft **400** may be moved to a position that may be inappropriate for a position of wingtip **456,** command **430** of thrust lever **424** may be prevented. If thrust lever **424** may be moved to a takeoff position, but wingtip **456** may be in a position that may not be allowed for takeoff, such as folded position **446,** warnings **460** may be issued. Further, command(s) **430** to increase thrust may be prevented until wingtip **456** may be in an appropriate position. Alternatively, or additionally, wing fold controller **428** may command **430** wingtip **456** to flight position **444.** Command **430** may be an automated command.

Warning system **426** may send warnings **460** based on a location of aircraft **400.** Warnings **460** may include aircraft location data. Warnings **460** may include a recommended action to mitigate warnings **460.** Location-based warnings **460** may be used before takeoff to verify aircraft **400** may be in a correct configuration for takeoff when aircraft **400** approaches the takeoff end of a runway. The correct configuration may be based on aircraft information **404.** Aircraft information **404** may include a position of wingtip **456.** Thus, warning system **426** may issue warnings **460** if wingtip **456** was not extended in flight position **444** before takeoff.

Warnings **460** based on location information **410** of aircraft **400** may be used after landing to verify aircraft **400** may be in a correct configuration for airport compatibility. The correct configuration for airport compatibility may include having wingtip **456** in folded position **446** before aircraft **400** operates on designated airport areas. Designated airport areas may include a taxiway, an apron, a de-icing station, a run-up pad, a runway, a gate, and/or even certain runways. For example, an airport may limit taxiway use to certain aircraft wingspan lengths. If aircraft **400** wingspan exceeds a particular taxiway wingspan limit with wingtip **456** in flight position **444,** but aircraft **400** may be within the limit when wingtip **456** may be in folded position **446,** warnings **460** could be issued before aircraft **400** enters the particular taxiway with wingtip **456** in flight position **444.** As another example, warning system **426** may issue a warning if aircraft **400** was approaching a gate with a wingtip configuration exceeding a wingspan limit of the gate.

Wing fold controller **428** may include any grouping of one more processors and programs of aircraft **400** that operate aircraft **400.** Wing fold controller **428** may be a component of a computer inside control center **416,** a component of a computer outside control center **416,** a component of a computer or controller of wing fold system **458** in wing **442,** or any combination thereof.

Wing fold controller **428** may receive status **402** related to aircraft **400** and to wing fold system **458.** Wing fold controller **428** may receive commands **430** via at least crew inputs **434.** Wing fold controller **428** may operate wing fold system **458** based on command(s) **430** received.

Wing fold controller **428** may determine that a lock of wing fold system **458** may be operational. If the lock may be operational, then wingtip **456** should not be able to move when wingtip **456** may be in flight position and the lock may be engaged. To make the determination, wing fold controller **428** may attempt to move wingtip **456** after a lock of wing fold system **458** may be in an engaged position with respect to a latch of wing fold system **458** that may be in a closed position. Wing fold controller **428** may attempt to move wingtip **456** by attempting to move unfixed portion **454.** Wing fold controller **428** communicates warnings **460** via warning system **426** in response to attempting to move wingtip **456** when wingtip **456** moves even though the lock may be in the engaged position and the latch may be in the closed position.

Wing fold controller **428** may be a single microcontroller or microprocessor, or may be one in a group of processors of aircraft **400.** Wing fold controller **428** may receive input data, status data, and configuration data. Wing fold controller **428** may send command data and alert data based on input data, status data, and configuration data.

Wing fold controller **428** may be implemented in software, hardware, or a combination of software and hardware. When software may be used, the operations performed by wing fold controller **428** may be implemented in program code configured to run on a processor unit. The processor unit may, for example, be one or more central processor units in a computer system that may be a general purpose computer. General purpose computers are described with respect to **Figure 10****.**

When hardware may be employed, the hardware may include circuits that operate to perform the operations in wing fold controller **428.** In the illustrative examples, the hardware may take the form of a circuit system, an integrated circuit, an application specific integrated circuit (ASIC), a programmable logic device, some other suitable type of hardware configured to perform a number of operations, or a combination thereof. With a programmable logic device, the device may be configured to perform the number of operations. The programmable logic device may be reconfigured at a later time or may be permanently configured to perform the number of operations.

Examples of programmable logic devices may include, for example, a programmable logic array, programmable array logic, a field programmable logic array, a field programmable gate array, and other suitable hardware devices. Additionally, the processes may be implemented in organic components integrated with inorganic components and/or may be included entirely of organic components excluding a human being. For example, the processes may be implemented as circuits in organic semiconductors.

Command(s) **430** may be received by wing fold controller **428.** Command(s) **430** may be received from input device **420.** Types **432** of command(s) **430** include crew input commands **434,** automated commands **436,** maintenance commands **438,** and factory commands **440.** Command(s) **430** may be any one of or a combination of crew input commands **434,** automated commands **436,** maintenance commands **438,** and factory commands **440.** Command(s) **430** may be used to control wing fold system **458.**

Wing **442** may be an illustrative embodiment of wing **102** and/or wing **104** in **Figure 1** and **Figure 2****.** Wing **442** may include flight position **444,** folded position **446,** fixed portion **448,** unfixed portion **454,** and wing fold system **458.** The folding of wing **442** may allow for aircraft **400** to be flown with a wingspan that may be longer than that allowed for ground operations at an airport from which aircraft **400** may take off and land. Wing **442** may provide lift for aircraft **100** in **Figure 1****.**

Flight position **444** may be a state of wing **442.** When wing **442** of aircraft **400** may be in flight position **444,** aircraft **400** may be ready for flight. For example, wing **102** and wing **104** of **Figure 1** are shown in flight position **444.**

Folded position **446** may be a state of wing **442.** When wing **442** of aircraft **400** may be in folded position **446,** aircraft **400** may not be ready for flight, but a wingspan of aircraft **400** may be smaller than the wingspan of aircraft **400** with wing **442** in flight position **444** and allow use of aircraft **400** at airports that may require smaller wingspans.

Fixed portion **448** may be an illustrative embodiment of fixed portion **124** of wing **102** and may be an embodiment of fixed portion **126** of wing **104** of **Figure 1** and **Figure 2****.** Fixed portion **448** of wing **442** may include wing box **452** and moveable control surfaces **450.** Wing box **452** may be a structural component from which wing **442** extends. Moveable control surfaces **450** may include flaps that may allow for controlling flight of aircraft **400.**

Unfixed portion **454** may be an embodiment of unfixed portion **120** of wing **102** and may be an embodiment of unfixed portion **122** of wing **104** of **Figure 1** and **Figure 2****.** Unfixed portion **454** may rotate with respect to fixed portion **448** of wing **442** between flight position **444** of wing **442** and folded position **446** of wing **442.** Unfixed portion **454** of wing **442** may include wingtip **456.** Wingtip **456** may not include moveable control surfaces **450.**

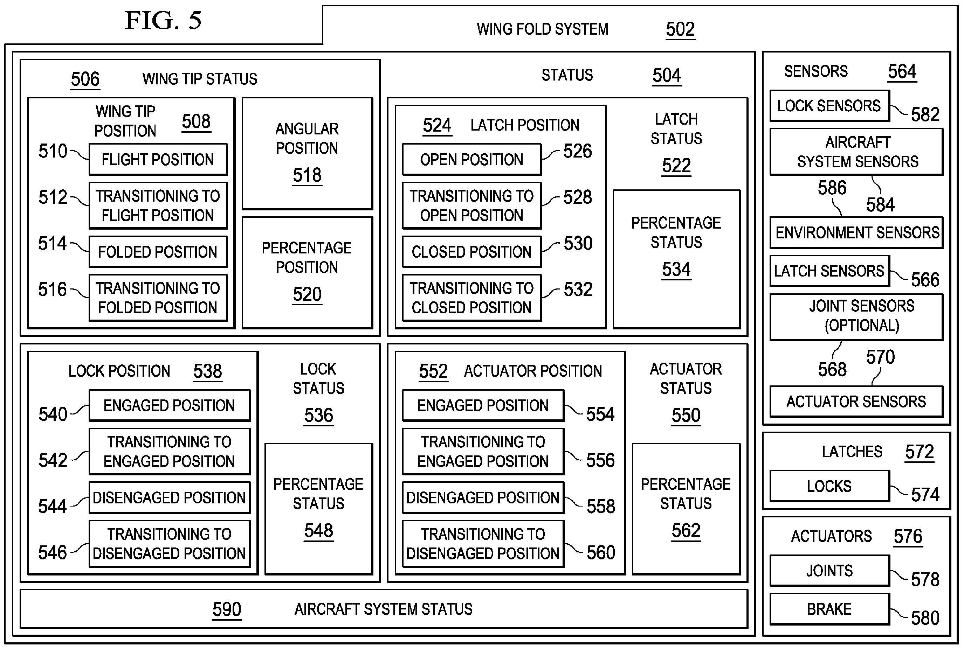

**Figure 5** is a block diagram of a wing fold system **502** in accordance with an illustrative embodiment. Wing fold system **502** may be an illustrative embodiment of wing fold system **128** and wing fold system **130** of aircraft **100** of **Figure 1** and **Figure 2** and wing fold system **458** of aircraft **400** of **Figure 4****.** Wing fold system **502** may move wingtip **456** of wing **442** of an aircraft between flight position **510** and folded position **514.** Wing fold system **502** may be controlled by a wing fold controller **428** of aircraft **400.**

Wing fold system **502** may include several features, elements, and components, including: status **504,** sensors **564,** latches **572,** actuators **576,** and joints **578.** Wing fold system **458** may move wingtip **456** between flight position **444** and folded position **446.** Wing fold system **458** may be controlled by wing fold controller **428.**

Status **504** may include wingtip status **506,** latch status **522,** lock status **536,** actuator status **550,** and aircraft system status **590.** Status **504** of wing fold system **502** may include information related to wing fold system **458** of **Figure 4****.**

Wingtip status **506** may indicate a status of wingtip **456** and may include wingtip position **508,** angular position **518,** and percentage position **520.** Wingtip position **508** may indicate a state of wingtip **456** and may include flight position **510,** transitioning to flight position **512,** folded position **514,** and transitioning to folded position **516.** Angular position **518** may indicate an angle of wingtip **456** with respect to wing **442.** Percentage position **520** may indicate a percentage related to a completion amount of a transition between flight position **444** and folded position **446.**

Flight position **510** may indicate that wingtip **456** may be ready for flight. Transitioning to flight position **512** may indicate that wingtip **456** may be being moved to flight position **510.** Folded position **514** may indicate that wingtip **456** may be fully folded so as to reduce an overall wingspan of an aircraft. Transitioning to folded position **516** may indicate that wingtip **456** may be being moved to folded position **514.**

Latch status **522** may indicate a status of each latch of latches **572** or of any group of latches **572.** Latch status **522** may indicate a status of latches **572** of wing fold system **502** and may include latch position **524** and percentage status **534.** Without limitation, latch status **522** may also indicate a status for any actuator, wiring, hydraulic power, electric power, or sensor associated with the particular latch among latches **572.**

Latch position **524** may indicate a position of a particular latch among latches **572** of wing fold system **502** and may include open position **526,** transitioning to open position **528,** closed position **530,** and transitioning to closed position **532.** Percentage status **534** may indicate a percentage related to a completion amount of a transition between open position **526** and closed position **530** of the particular latch among latches **572.**

Open position **526** may indicate that a particular latch among latches **572** may be open and wingtip **456** may be not secured. Transitioning to open position **528** may indicate that the particular latch may be being moved to open position **526** to release wingtip **456** so that it may be folded. Closed position **530** may indicate that the particular latch may be closed and wingtip **456** may be secured. Transitioning to closed position **532** may indicate that the particular latch may be being moved to closed position **530** to secure wingtip **456.**

Lock status **536** may indicate a status of each lock of a particular latch among latches **572** or of any group of locks 574 of latches **572.** Lock status **536** may indicate a status of locks **574** of latches **572** of wing fold system **502** and may include lock position **538** and percentage status **548.** Without limitation, lock status **536** may also indicate a status for any actuator, wiring, hydraulic power, electric power, or sensor associated with a particular latch among locks **574.**

Lock position **538** may indicate a position of a lock of wing fold system **502** and may include engaged position **540,** transitioning to engaged position **542,** disengaged position **544,** and transitioning to disengaged position **546.** Percentage status **548** may indicate a percentage related to a completion amount of a transition between engaged position **540** and disengaged position **544.**

Engaged position **540** may indicate that a lock may be engaged with a latch and may indicate that the latch may be secured. Engaged position **540** may be associated with wingtip **456** being in flight position **510.** Transitioning to engaged position **542** may indicate that locks **574** may be transitioning to engaged position **540** to secure latch **572.** Disengaged position **544** may indicate that a lock **574** may be not engaged with latches **572** and may indicate that latch **572** may be not secured. Disengaged position **544** may be associated with wingtip **456** being in folded position **514.** Transitioning to disengaged position **546** may indicate that locks **574** may be transitioning to disengaged position **544** to release latches **572** so that wingtip **456** may fold.

Actuator status **550** may indicate a status of each actuator of wing fold system **502** or of any group of actuators **576.** Actuator status **550** may include actuator position **552** and percentage status **562.** Without limitation, actuator status **550** may also indicate a status for any controller, wiring, hydraulic power, electric power, or sensor associated with a particular actuator among actuators **576.**

Actuator position **552** may indicate a position of an actuator of wing fold system **502** and may include engaged position **554,** transitioning to engaged position **556,** disengaged position **558,** and transitioning to disengaged position **560.** Percentage status **562** may indicate a percentage related to a completion amount of a transition between engaged position **554** and disengaged position **558.**

Engaged position **554** may indicate that an actuator of wing fold system **502** may be engaged with a lock, latch, or wingtip **456.** Transitioning to engaged position **556** may indicate that an actuator may be transitioning to engaged position **554** to actuate a lock, latch, or wingtip **456.** Disengaged position **558** may indicate that an actuator may be not engaged with a lock, latch, or wingtip **456** and may be not providing any force thereto. Transitioning to disengaged position **560** may indicate that an actuator may be transitioning to disengaged position **558** to release a latch so that wingtip **456** may fold.

Aircraft system status **590** may include a status of any aircraft system that may affect wing fold system **502.** Without limitation, aircraft hydraulic system, electrical system, wiring, controllers, and motors may affect wing fold system **502.** Without limitation, a failure of electrical or hydraulic power to a component of wing fold system **502** may affect performance of a component of wing fold system **502.**

Sensors **564** may sense positions and/or loads of components of wing fold system **502.** Sensors **564** may include: latch sensors **566** that may sense one or more of status and position of a latch; joint sensors **568** that may sense one or more of status, position, and load of a joint; actuator sensors **570** that may sense one or more of status, position, and load of an actuator; and lock sensors **582** that may sense one or more of status and position of a lock.

Sensors **564** may also include aircraft system sensors **584,** and environment sensors **586.** Aircraft system sensors **584** may sense one or more of a status or functionality of various aircraft systems that may include, a hydraulic system, an electrical system, wiring, a flight control system, wing fold controller **428,** and/or control center **416.** Without limitation, aircraft system sensors **584** may include a pitot or static system, a navigation system receiver, a thrust lever position, hydraulic pressure, hydraulic quantity, electrical voltage or current, and solenoid and/or a valve position. Without limitation, aircraft system sensors **584** may provide information to determine wind speed, and/or aircraft airspeed or ground speed.

Environment sensors **586** may include sensors that detect conditions present around and/or approaching aircraft **400.** Conditions present around and/or approaching aircraft **400** may include, a physical location of aircraft **400,** weather, a building, an airport structure, and any obstacle or vehicle around and/or approaching aircraft. Without limitation, environment sensors may include radar, an aircraft air-ground sensor, a Global Positioning System receiver, and/or an Automatic Dependent Surveillance-Broadcast (ADS-B) receiver.

Latches **572** may latch and secure wingtip **456** in flight position **510.** Latches **572** may include locks **574** that may lock latches **572** in closed position **530** to secure latch **572** and wingtip **456** in flight position **510.**

Actuators **576** may actuate various components of wing fold system **502.** Actuators **576** may include a wingtip actuator that may transition wingtip **456** between flight position **510** and folded position **514.** The wingtip actuator may move wingtip **456** by moving unfixed portion **454.**

The wingtip actuator may include brake **580.** Brake **580** may be any type of brake as may be known in the art for inhibiting motion of wingtip **456.** Without limitation, brake **580** may be a pressure-off brake that may be spring biased and inhibit motion of wingtip actuator unless hydraulic pressure may be present on the brake. Thus, hydraulic power may be withheld from the wingtip actuator, and the brake may inhibit movement of the wingtip actuator while hydraulic pressure may be removed from components of wing fold system **502** such as but not limited to the wingtip actuator.

Brake **580** may provide redundancy to ensure that when wingtip position **508** may be in flight position **510** or in folded position **514,** that actuator will not attempt to move wingtip **456** without a command. Brake **580** may provide redundancy to ensure that hydraulic fluid is not in a hydraulic actuator except when actuation of the actuator is commanded. Brake **580** may also be activated by wing fold controller **428** based on another status **504.**

Actuators **576** may also include a latch actuator that may transition latches **572** between open position **526** and closed position **530.** Actuators **576** may also include a lock actuator that may transition locks **574** of latches **572** between engaged position **540** and disengaged position **544.**

Joints **578** may allow movement of wingtip **456** of a wing with respect to wing **442.** Wingtip **456** of wing **442** may move, rotate, or fold with respect to wing **442** via joints **578.** Joints **578** may be located on fixed portion **448** and/or unfixed portion **454** and may connect fixed portion **448** and unfixed portion **454.**

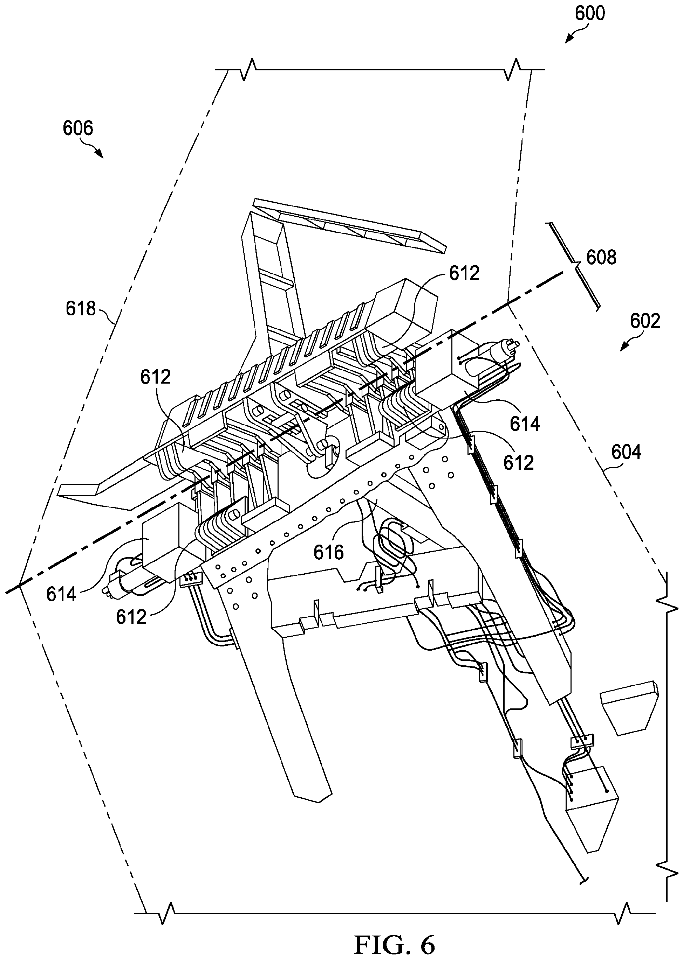

**Figure 6** is a diagram of a wing embodying a wing fold system in accordance with an illustrative embodiment. **Figure 6** depicts a wing embodying a wing fold system controlled by a wing fold controller. Wing **602** may be an illustrative embodiment of wing **442** of aircraft **400** of **Figure 4** and wing **102/104** of aircraft **100** of **Figure 1****.** **Figure 6** depicts an underside of wing **602** in a folded position. Wing **602** may include fixed portion **604,** unfixed portion **606,** and wing fold system **608.**

Fixed portion **604** may be an embodiment of fixed portion **124** of wing **102** and fixed portion **126** of wing **104** of **Figure 1** and **Figure 2****.** Fixed portion **604** may be an embodiment of fixed portion **448** of wing **442** of **Figure 4****.** Fixed portion **604** of wing **602** may include a wing box and moveable control surfaces (not shown).

Unfixed portion **606** may be an embodiment of unfixed portion **120** of wing **102,** unfixed portion **122** of wing **104** of **Figure 1****,** and unfixed portion **454** of wing **442** of **Figure 4****.** Unfixed portion **606** may rotate with respect to fixed portion **604** of wing **602** between a flight position and a folded position. Unfixed portion **606** of wing **602** may include wingtip **618.** Wingtip **618** may not include moveable control surfaces. In alternative embodiments, a control surface may be included in wingtip **618.**

Wing fold system **608** may be an embodiment of a wing fold system of a wing of an aircraft, such as wing **102** and wing **104 of** aircraft **100** of **Figure 1** and **Figure 2****.** Wing fold system **608** may be an embodiment of wing fold system **458** of wing **442** of aircraft **400** of **Figure 4****.** Wing fold system **608** may be an embodiment of wing fold system **502** of **Figure 5****.** Wing fold system **608** may move unfixed portion **606** with respect to fixed portion **604** in response to a wing fold controller, such as wing fold controller **428** of **Figure 4****.** Wing fold system **608** may include latches **612,** locks **614,** and actuator **616.**

Latches **612** may latch and secure wingtip **618** in a flight position. Locks **614** may engage latches **612** when latches **612** may be in a closed position to prevent latches **612** from opening while wingtip **618** may be in flight position. Wingtip actuator **616** may actuate wingtip **618** to transition wingtip **618** between the flight position and a folded position.

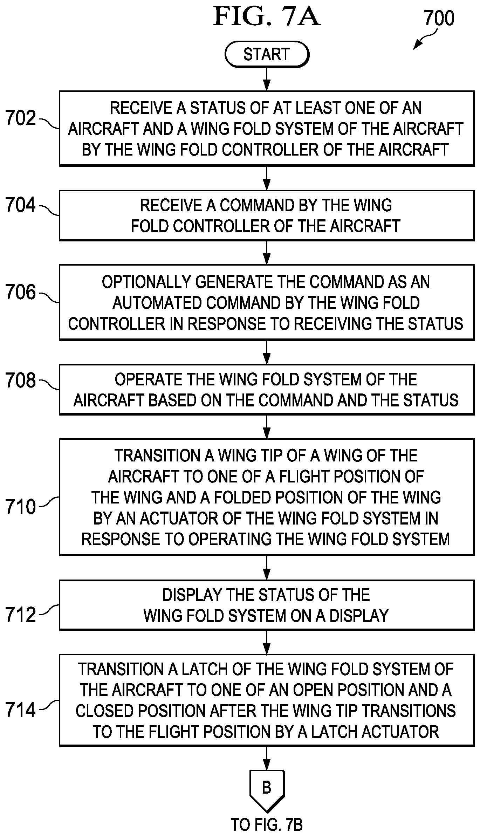

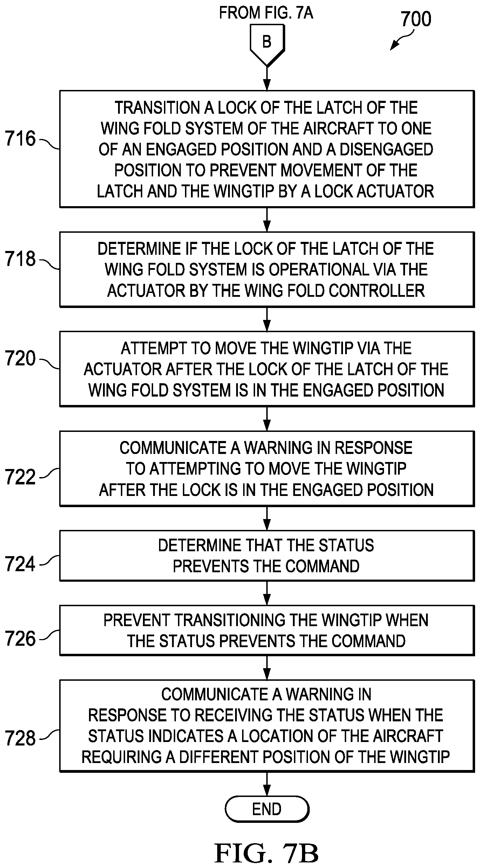

**Figure 7a** and **Figure 7b** are a flowchart of a method **700** of a wing fold controller in accordance with an illustrative embodiment. Method **700** shown in **Figure 7a** and **Figure 7b** may be implemented using aircraft **100** of **Figure 1** and **Figure 2****.** The process shown in **Figure 7a** and **Figure 7b** may be implemented by a processor, such as processor unit **1004** of **Figure 10****.** The process shown in **Figure 7a** and **Figure 7b** may be a variation of the processes shown in **Figure 1** through **Figure 6** and **Figure 8** through **Figure 10****.** Although the operations presented in **Figure 7a** and **Figure 7b** are described as being performed by a "process," the operations are being performed by at least one tangible processor or using one or more physical devices, as described elsewhere herein. The term "process" also may include computer instructions stored on a non-transitory computer readable storage medium.

Method **700** may begin as the process may receive a status of at least one of an aircraft and a wing fold system of the aircraft by the wing fold controller of the aircraft (operation **702**). Next, the process may receive a command by the wing fold controller of the aircraft (operation **704**). Next, the process may optionally generate the command as an automated command by the wing fold controller in response to receiving the status (operation **706**)

A wing controller may generate an automated command to set a wing to a folded position when the status indicates the aircraft may be on or approaching a taxiway. A wing controller may generate an automated command to set the wing to the flight position when the status indicates the aircraft may be on a runway, such as without limitation after touchdown, or when using a runway to taxi the aircraft.

Based on an aircraft's location relative to a taxiway and/or a runway, a warning may be provided to the crew to change a position of a wingtip. Typically, the wingtip position may be changed while the aircraft may be on the ground. In a non-limiting example, an aircraft may have its wingtips in a folded position while at the gate, and in a flight position when approaching a runway for takeoff. A command to move the wingtip to the flight position may be automatically generated. The command to move the wingtip to the flight position may be based on the aircraft's position relative to the taxiway and/or the runway.

After aircraft **400** touchdown on landing, wingtip **456** may be folded. Command **430** to fold wingtip **456** may change the position of wingtip **456** based on the aircraft's position relative to the taxiway or the runway. Command **430** to fold wingtip **456** may be automatically generated.

Next, the process may operate the wing fold system of the aircraft based on the command and the status (operation **708**). A wing fold controller may operate the wing fold system of the aircraft based on the command received in operation **704** and the status received in operation **702.** Operation of the wing fold system by the wing fold controller may be via electrical, optical, mechanical, pneumatic, or hydraulic connections between the wing fold controller and the wing fold system and its various components.

Next, the process may transition a wingtip of a wing of the aircraft to one of a flight position of the wing and a folded position of the wing by an actuator of the wing fold system in response to operating the wing fold system (operation **710**). Transitioning of the wingtip may take place by rotating or folding the wingtip at a joint shared by the wingtip and a fixed portion of the wing via the actuator. The actuator may be mechanically connected directly to the wingtip, or through a series of links and joints to establish the mechanical connection.

Next, the process may display the status of the wing fold system on a display (operation **712**). The display may show any combination of the status received in operation **702**, the command received in operation **704,** and any other status related to a wing fold system.

Next, the process may transition a latch of the wing fold system of the aircraft to one of an open position and a closed position after the wingtip transitions to the flight position by a latch actuator (operation **714**). The latch may secure the wingtip in the flight position so as to prevent movement of the wingtip during flight of the aircraft.

Next, the process may transition a lock of the latch of the wing fold system of the aircraft to one of an engaged position and a disengaged position to prevent movement of the latch and the wingtip by a lock actuator (operation **716**). Next, the process may determine if the lock of the latch of the wing fold system may be operational via the actuator by the wing fold controller (operation **718**). In so doing, the wing fold controller may cross check the functionality of components of a wing fold system.

Next, the process may attempt to move the wingtip via the actuator after the lock of the latch of the wing fold system may be in the engaged position (operation **720**). If the lock and latch are working properly, the wingtip may not move. If either one or both of the lock and the latch are not working properly, the wingtip may move. Being able to move the wingtip after the lock and the latch are engaged indicates that the wing fold system may not be working properly.

Next, the process may communicate a warning in response to attempting to move the wingtip after the lock may be in the engaged position (operation **722**). The warning may indicate that the aircraft may not be ready for flight and may be in need of maintenance.

Next, the process may determine that the status prevents the command (operation **724**). When an aircraft may be in flight, the wing controller may determine that a command to fold a wingtip may be prevented by the aircraft's status of being in flight.

Next, the process may prevent transitioning the wingtip when the status prevents the command (operation **726**). When an aircraft may be in flight, the wing controller may prevent executing a command to fold the wingtip since the aircraft may be in flight. Additionally, when the status would prevent the command, an indication of such may be given to a crew member on a display of the aircraft.

Next, the process may communicate a warning in response to receiving the status when the status indicates a location of the aircraft requiring a different position of the wingtip (operation **728**). The warning may be communicated when the status indicates the wingtip may be in the flight position and the location indicates that the aircraft may be situated on or approaching a taxiway, a gate, or any location that may require the wingspan to be reduced. The warning may be communicated when the status indicates the wingtip may be in the folded position and the location indicates that the aircraft may be on a runway. Method **700** may terminate thereafter.

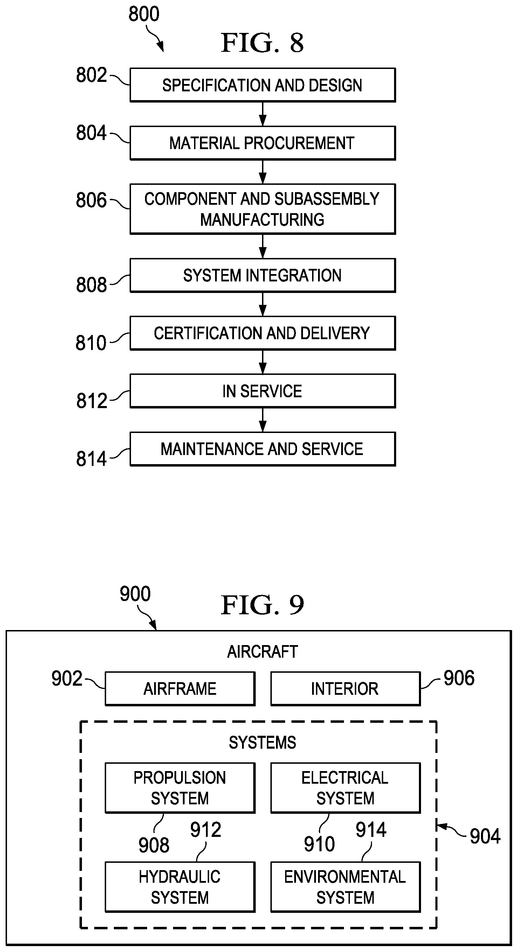

**Figure 8** is a flowchart of a method of manufacturing a commercial aircraft. Illustrative embodiments of the disclosure may be described in the context of aircraft manufacturing and service method **800** as depicted in **Figure 8** and aircraft **900** as shown in **Figure 9**. Turning first to **Figure 8****,** an illustration of an aircraft manufacturing and service method is depicted in accordance with an illustrative embodiment. During pre-production, aircraft manufacturing and service method **800** may include specification and design **802** of aircraft **900** in **Figure 9** and material procurement **804.**

During production, component and subassembly manufacturing **806** and system integration **808** of aircraft **900** in **Figure 9** takes place. Thereafter, aircraft **900** in **Figure 9** may go through certification and delivery **810** in order to be placed in service **812.** While in service **812** by a customer, aircraft **900** in **Figure 9** may be scheduled for routine maintenance and service **814,** which may include modification, reconfiguration, refurbishment, and other maintenance or service.

Each of the processes of aircraft manufacturing and service method **800** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

**Figure 9** is a block diagram of a commercial aircraft. Aircraft **900** may be produced by aircraft manufacturing and service method **800** in **Figure 8** and may include airframe **902** with plurality of systems **904** and interior **906.** Examples of systems **904** include one or more of propulsion system **908,** electrical system **910,** hydraulic system **912,** and environmental system **914.** Any number of other systems may be included. Although an aerospace example is shown, different illustrative embodiments may be applied to other industries, such as the automotive industry.

Apparatuses and methods embodied herein may be employed during at least one of the stages of aircraft manufacturing or service method **800** in **Figure 8****.** In one illustrative example, components or subassemblies produced in component and subassembly manufacturing **806** in **Figure 8** may be fabricated or manufactured in a manner similar to components or subassemblies produced while aircraft **900** may be in service **812** in **Figure 8****.** As yet another example, one or more apparatus embodiments, method embodiments, or a combination thereof may be utilized during production stages, such as component and subassembly manufacturing **806** and system integration **808** in **Figure 8****.** One or more apparatus embodiments, method embodiments, or a combination thereof may be utilized while aircraft **900** may be in service **812** and/or during maintenance and service **814** in **Figure 8****.** The use of a number of the different illustrative embodiments may substantially expedite the assembly of and/or reduce the cost of aircraft **900.**

**Figure 10** is an illustration of a data processing system, in accordance with an illustrative embodiment. Data processing system **1000** in **Figure 10** may be an example of a data processing system that may be used to implement the illustrative embodiments, such as aircraft **100** of **Figure 1** or **Figure 2****,** or any other module or system or process disclosed herein. In this illustrative example, data processing system **1000** includes communications fabric **1002,** which provides communications between processor unit **1004,** memory **1006,** persistent storage **1008,** communications unit **1010,** input/output (I/O) unit **1012,** and display **1014.**

Processor unit **1004** serves to execute instructions for software that may be loaded into memory **1006.** Processor unit **1004** may be a number of processors, a multi-processor core, or some other type of processor, depending on the particular implementation. A number, as used herein with reference to an item, means one or more items. Further, processor unit **1004** may be implemented using a number of heterogeneous processor systems in which a main processor may be present with secondary processors on a single chip. As another illustrative example, processor unit **1004** may be a symmetric multi-processor system containing multiple processors of the same type.

Memory **1006** and persistent storage **1008** may be embodiments of storage devices **1016.** A storage device may be any piece of hardware that may be capable of storing information, such as, for example, without limitation, data, program code in functional form, and/or other suitable information either on a temporary basis and/or a permanent basis. Storage devices **1016** may also be referred to as computer readable storage devices in these examples. Memory **1006,** in these examples, may be, for example, a random access memory or any other suitable volatile or non-volatile storage device. Persistent storage **1008** may take various forms, depending on the particular implementation.

For example, persistent storage **1008** may contain one or more components or devices. For example, persistent storage **1008** may be a hard drive, a flash memory, a rewritable optical disk, a rewritable magnetic tape, or some combination of the above. The media used by persistent storage **1008** also may be removable. For example, a removable hard drive may be used for persistent storage **1008.**

Communications unit **1010,** in these examples, may provide for communications with other data processing systems or devices. In these examples, communications unit **1010** may be a network interface card. Communications unit **1010** may provide communications through the use of either or both physical and wireless communications links.

Input/output (I/O) unit **1012** may allow for input and output of data with other devices that may be connected to data processing system **1000.** Without limitation, input/output (I/O) unit **1012** may provide a connection for user input through a keyboard, a mouse, a processor, lever, or switch that may be in a control center that may be in a cockpit or in a maintenance facility, and/or some other suitable input device. Further, input/output (I/O) unit **1012** may send output to a printer. Display **1014** may provide a mechanism to display information to a user.

Instructions for the operating system, applications, and/or programs may be located in storage devices **1016,** which are in communication with processor unit **1004** through communications fabric **1002.** In these illustrative examples, the instructions are in a functional form on persistent storage **1008.** These instructions may be loaded into memory **1006** for execution by processor unit **1004.** The processes of the different embodiments may be performed by processor unit **1004** using computer implemented instructions, which may be located in a memory, such as memory **1006.**

These instructions are referred to as program code, computer usable program code, or computer readable program code that may be read and executed by a processor in processor unit **1004.** The program code in the different embodiments may be embodied on different physical or computer readable storage media, such as memory **1006** or persistent storage **1008.**

Program code **1018** may be located in a functional form on computer readable media **1020** that may be selectively removable and may be loaded onto or transferred to data processing system **1000** for execution by processor unit **1004.** Program code **1018** and computer readable media **1020** form computer program product **1022** in these examples. In one example, computer readable media **1020** may be computer readable storage media **1024** or computer readable signal media **1026.** Computer readable storage media **1024** may include, for example, an optical or magnetic disk that may be inserted or placed into a drive or other device that may be part of persistent storage **1008** for transfer onto a storage device, such as a hard drive, that may be part of persistent storage **1008.** Computer readable storage media **1024** also may take the form of a persistent storage, such as a hard drive, a thumb drive, or a flash memory, that may be connected to data processing system **1000.** In some instances, computer readable storage media **1024** may not be removable from data processing system **1000.**

Alternatively, program code **1018** may be transferred to data processing system **1000** using computer readable signal media **1026.** Computer readable signal media **1026** may be, for example, a propagated data signal containing program code **1018.** For example, computer readable signal media **1026** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code **1018** may be downloaded over a network to persistent storage **1008** from another device or data processing system through computer readable signal media **1026** for use within data processing system **1000.** For instance, program code stored in a computer readable storage medium in a server data processing system may be downloaded over a network from the server to data processing system **1000.** The data processing system providing program code **1018** may be a server computer, a client computer, or some other device capable of storing and transmitting program code **1018.**

The different components illustrated for data processing system **1000** are not meant to provide architectural limitations to the manner in which different embodiments may be implemented. The different illustrative embodiments may be implemented in a data processing system including components in addition to or in place of those illustrated for data processing system **1000.** Other components shown in **Figure 10** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1004** may take the form of a hardware unit that has circuits that are manufactured or configured for a particular use. This type of hardware may perform operations without needing program code to be loaded into a memory from a storage device to be configured to perform the operations.

For example, when processor unit **1004** takes the form of a hardware unit, processor unit **1004** may be a circuit system, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code **1018** may be omitted because the processes for the different embodiments are implemented in a hardware unit.

In still another illustrative example, processor unit **1004** may be implemented using a combination of processors found in computers and hardware units. Processor unit **1004** may have a number of hardware units and a number of processors that are configured to run program code **1018.** With this depicted example, some of the processes may be implemented in the number of hardware units, while other processes may be implemented in the number of processors.

As another example, a storage device in data processing system **1000** may be any hardware apparatus that may store data. Memory **1006,** persistent storage **1008,** and computer readable media **1020** are examples of storage devices in a tangible form.

In another example, a bus system may be used to implement communications fabric **1002** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **1006,** or a cache, such as found in an interface and memory controller hub that may be present in communications fabric **1002.**

Data processing system **1000** may also include at least one associative memory (not shown in **Figure 10**). Associative memory may be in communication with communications fabric **1002.** Associative memory may also be in communication with, or in some illustrative embodiments, be considered part of storage devices **1016.** The different illustrative embodiments can take the form of an entirely hardware embodiment, an entirely software embodiment, or an embodiment containing both hardware and software elements. Some embodiments are implemented in software, which includes but may be not limited to forms, such as, for example, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non-limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or usable program code such that when the computer readable or usable program code may be executed on a computer, the execution of this computer readable or usable program code causes the computer to transmit another computer readable or usable program code over a communications link. This communications link may use a medium that may be, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples of modems and network adapters are just a few of the currently available types of communications adapters.

The flowcharts and block diagrams in the different depicted illustrative embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

## Claims

1. A method of controlling folding of a wing (442), the method comprising:
receiving a status (402), of at least one of: an aircraft (400), and a wing fold system (458) comprised by the aircraft (400), by a wing fold controller (428) comprised by the aircraft (400);
receiving a command (430), by the wing fold controller (428), in response to receiving the status (402);
operating the wing fold system (458), by the wing fold controller (428), based on the command (430) and the status (402); and
transitioning, via a wingtip actuator (616) comprised by the wing fold system (458), a wingtip (456) of the wing (442) comprised by the aircraft (400) to one of: a flight position (444) of the wing (442) and a folded position (446) of the wing (442), in response to operating the wing fold system (458) by the wing fold controller (428); **characterised in that**:
the status (402) indicates the aircraft (400) is either on a taxiway or rolling toward a taxiway and the command (430) directs the wing (442) to the folded position (446); and
wherein the status (402) indicates the aircraft (400) is either on a runway or rolling toward a runway and the command (430) directs the wing (442) to the flight position (444) .

2. The method of claim 1, further comprising:
displaying the status (402) of the wing fold system (458) on a display (418).

3. The method of any preceding claim, further comprising:
determining, via the wing fold controller (428), if a lock (574) of the wing fold system (458) is operational via attempting to move the wingtip (456) via the wingtip actuator (616) after the lock (574) of the wing fold system (458) is in an engaged position (540); and
communicating a warning (460) in response to attempting to move the wingtip (456) after the lock (574) is in the engaged position (540).

4. The method of any preceding claim, further comprising:
determining, via the wing fold controller (428), that the status (402) prevents the command (430); and
preventing, via the wing fold controller (428), the wingtip actuator (616) from transitioning the wingtip (456) when the status (402) prevents the command (430).

5. The method of any preceding claim, further comprising:
transitioning, via a latch actuator (576), a latch (572) of the wing fold system (458) of the aircraft (400) to one of an open position (526) and a closed position (530) after the wingtip (456) transitions to the flight position (510) .

6. The method of any preceding claim, further comprising:
transitioning, via a lock actuator (576), a lock (574) of a latch (572) of the wing fold system (458) of the aircraft (400) to one of: an engaged position (540), and a disengaged position (544) that prevents movement of: the latch (572), and the wingtip (456).

7. The method of any preceding claim, further comprising:
communicating a warning (460) in response to receiving the status (402), when the status (402) indicates that a location of the aircraft (400) requires a different position of the wingtip (456).

8. The method of any preceding claim,
wherein the status (402) indicates that the wingtip (456) is in the flight position (510), and that a location of the aircraft (400) is one of: on a taxiway, and at a gate; and
wherein the status (402) indicates that the wingtip (456) is in the folded position (514), and the location of the aircraft (400) is on a runway.

9. An apparatus to control a wing fold system (458) of a wing (442) of an aircraft (400), the apparatus comprising:
a wing fold controller (428) configured to:
receive a status (402) of at least one of: the aircraft (400), and the wing fold system (458) of the aircraft (400);
receive a command (430) based on receiving the status (402); and
operate the wing fold system (458) of the aircraft (400) based on the command (430) and the status (402); and
a wingtip actuator (616) configured to transition, in response to the wing fold controller (428), a wingtip (456) of the wing (442) of the aircraft (400) to one of: a flight position (510) and a folded position (514); **characterised in that**:
the status (402) indicates that the aircraft (400) is at least one of: on a taxiway, and rolling toward the taxiway, and the command (430) directs the wing (442) to the folded position (446); and
wherein the status (402) indicates the aircraft (400) is at least one of: on a runway, and rolling toward the runway, and the command (430) directs the wing (442) to the flight position (444).

10. The apparatus of claim 9, further comprising:
a display configured to display the status of the wing fold system.

11. The apparatus of any of claim 9 or claim 10, further comprising:
the wing fold controller (428) configured to: determine that a lock (574) of the wing fold system (458) is operational via an attempt to move the wingtip (456), via the wingtip actuator (616), after the lock (574) of a latch (572) of the wing fold system (458) is in an engaged position (540), and communicate a warning (460) in response to attempting to move the wingtip (456) after the lock (574) is in the engaged position (540).

12. The apparatus of any of claims 9 to 11, further comprising:
the wing fold controller (428) configured to: determine that the status (402) prevents the command (430), and prevent transitioning the wingtip (456) when the status (402) prevents the command (430).

13. The apparatus of any of claims 9 to 12, further comprising:
a latch actuator (576) configured to transition a latch (572) of the wing fold system (458) of the aircraft (400) to one of: an open position (526), and a closed position (530), after the wingtip (456) transitions to the flight position (510); and
a lock actuator (576) configured to transition a lock (574) of the wing fold system (458) of the aircraft (400) to one of: an engaged position (540), and a disengaged position (544), and prevent movement of the latch (572) and the wingtip (456).

14. The apparatus of any of claims 9 to 13, further comprising:
the wing fold controller (428) configured to communicate, when the status (402) indicates that a location of the aircraft (400) requires a different position (508) of the wingtip (456), a warning (460) in response to receiving the status (402), and the status (402) indicates at least one of:
that the wingtip (456) is in the flight position (510), and that the aircraft (400) is one of: on a taxiway, at a gate, approaching any obstacle or vehicle that the wing fold controller (428) predicts to contact the wingtip (456), and approaching a taxiway; and
that the wingtip (456) is in the folded position (514) and at least one of: on a runway, and rolling toward a runway.

## Patentansprüche

1. Verfahren zum Steuern des Faltens eines Flügels (442), wobei das Verfahren umfasst:
Empfangen eines Status (402) eines Flugzeugs (400) oder eines Flügelfaltsystems (458) des Flugzeugs (400) durch eine Flügelfaltsteuerung (428) des Flugzeugs (400);
Empfangen eines Befehls (430) durch die Flügelfaltsteuerung (428) als Antwort auf den Empfang des Status (402);
Betreiben des Flügelfaltsystems (458) durch die Flügelfaltsteuerung (428) basierend auf dem Befehl (430) und dem Status (402); und
mittels eines Flügelspitzenaktuators (616) des Flügelfaltsystems (458) Umschalten einer Flügelspitze (456) des Flügels (442) des Flugzeugs (400) entweder in eine Flugposition (444) des Flügels (442) oder in eine gefaltete Position (446) des Flügels (442) als Antwort auf das Betreiben des Flügelfaltsystems (458) durch die Flügelfaltsteuerung (428),
**dadurch gekennzeichnet, dass**:
der Status (402) anzeigt, dass sich das Flugzeug (400) entweder auf einer Rollbahn befindet oder zu einer Rollbahn rollt, und der Befehl (430) den Flügel (442) in die gefaltete Position (446) lenkt; und
wobei der Status (402) anzeigt, dass sich das Flugzeug (400) entweder auf einer Start-/Landebahn befindet oder zu einer Start-/Landebahn rollt, und der Befehl (430) den Flügel (442) in die Flugposition (444) lenkt.

2. Verfahren nach Anspruch 1, ferner mit:
Anzeigen des Status (402) des Flügelfaltsystems (458) auf einem Display (418).

3. Verfahren nach einem der vorhergehenden Ansprüche, ferner mit:
Bestimmen mittels der Flügelfaltsteuerung (428), ob ein Schloss (574) des Flügelfaltsystems (458) funktionsbereit ist, indem versucht wird, die Flügelspitze (456) mittels des Flügelspitzenaktuators (616) zu bewegen, nachdem sich das Schloss (574) des Flügelfaltsystems (458) in einer Eingriffsposition (540) befindet; und
Kommunizieren einer Warnung (460) als Reaktion auf den Versuch, die Flügelspitze (456) zu bewegen, nachdem sich das Schloss (574) in der Eingriffsposition (540) befindet.

4. Verfahren nach einem der vorhergehenden Ansprüche, ferner mit:
Feststellen mittels der Flügelfaltsteuerung (428), dass der Status (402) den Befehl (430) verhindert; und
Verhindern mittels der Flügelfaltsteuerung (428), dass der Flügelspitzenaktuator (616) die Flügelspitze (456) umschaltet, wenn der Status (402) den Befehl (430) verhindert.

5. Verfahren nach einem der vorhergehenden Ansprüche, ferner mit:
Umschalten eines Riegels (572) des Flügelfaltsystems (458) des Flugzeugs (400) mittels eines Riegelaktuators (576) in entweder eine offene Position (526) oder eine geschlossene Position (530), nachdem die Flügelspitze (456) in die Flugposition (510) umschaltet.

6. Verfahren nach einem der vorhergehenden Ansprüche, ferner mit:
Umschalten eines Schlosses (574) eines Riegels (572) des Flügelfaltsystems (458) des Flugzeugs (400) mittels eines Schlossaktuators (576) entweder in eine Eingriffsposition (540) oder eine Nichteingriffsposition (544), die eine Bewegung des Riegels (572) und der Flügelspitze (456) verhindert.

7. Verfahren nach einem der vorhergehenden Ansprüche, ferner mit:
Kommunizieren einer Warnung (460) als Reaktion auf den Empfang des Status (402), wenn der Status (402) anzeigt, dass der Ort des Flugzeugs (400) eine andere Position der Flügelspitze (456) erfordert.

8. Verfahren nach einem der vorhergehenden Ansprüche, bei dem der Status (402) anzeigt, dass die Flügelspitze (456) in der Flugposition ist und dass ein Ort des Flugzeugs (400) eine Rollbahn oder ein Gate ist, und
bei dem der Status (402) anzeigt, dass die Flügelspitze (456) in der gefalteten Position ist und der Ort des Flugzeugs (400) auf einer Start-/Landebahn ist.

9. Vorrichtung zum Steuern eines Flügelfaltsystems (458) eines Flügels (442) eines Flugzeugs (400), wobei die Vorrichtung umfasst:
eine Flügelfaltsteuerung (428), die konfiguriert ist,
einen Status (402) des Flugzeugs (400) oder des Flügelfaltsystems (458) des Flugzeugs (400) zu empfangen;
basierend auf dem Empfang des Status (402) einen Befehl (430) zu empfangen;
das Flügelfaltsystem (458) des Flugzeugs (400) basierend auf dem Befehl (430) und dem Status (402) zu betreiben; und
einen Flügelspitzenaktuator (616), der konfiguriert ist, um
in Reaktion auf die Flügelfaltsteuerung (428) eine Flügelspitze (456) des Flügels (442) des Flugzeugs (400) entweder in eine Flugposition (510) oder in eine gefaltete Position (514) umzuschalten, **dadurch gekennzeichnet, dass**: der Status (402) anzeigt, dass sich das Flugzeug (400) auf einer Rollbahn befindet oder zu einer Rollbahn rollt, und der Befehl (430) den Flügel (442) in die gefaltete Position (446) lenkt; und wobei der Status (402) anzeigt, dass sich das Flugzeug (400) entweder auf einer Start-/Landebahn befindet oder zu einer Start-/Landebahn rollt, und der Befehl (430) den Flügel (442) in die Flugposition (444) lenkt.

10. Vorrichtung nach Anspruch 9, ferner mit einem Display (418) zum Anzeigen des Status (402) des Flügelfaltsystems (458).

11. Vorrichtung nach Anspruch 9 oder 10, ferner mit :
der Flügelfaltsteuerung (428), die konfiguriert ist, um mittels eines Versuchs, die Flügelspitze (456) mittels des Flügelspitzenaktuators (616) zu bewegen, nachdem sich das Schloss (574) des Flügelfaltsystems (458) in einer Eingriffsposition (540) befindet, zu bestimmen, dass ein Schloss (574) des Flügelfaltsystems (458) funktionsbereit ist; und
als Reaktion auf den Versuch, die Flügelspitze (456) zu bewegen, nachdem sich das Schloss (574) in der Eingriffsposition (540) befindet, eine Warnung (460) zu kommunizieren.

12. Vorrichtung nach einem der Ansprüche 9 bis 11, bei der die Flügelfaltsteuerung (428) konfiguriert ist, um festzustellen, dass der Status (402) den Befehl (430) verhindert; und das Umschalten der Flügelspitze (456) zu verhindern, wenn der Status (402) den Befehl (430) verhindert.

13. Vorrichtung nach einem der Ansprüche 9 bis 12, ferner mit
einem Riegelaktuator (576), der konfiguriert ist, um einen Riegels (572) des Flügelfaltsystems (458) des Flugzeugs (400) in entweder eine offene Position (526) oder eine geschlossene Position (530) umzuschalten, nachdem die Flügelspitze (456) in die Flugposition (510) umschaltet, und
einem Schlossaktuator (576), der konfiguriert ist, um ein Schloss (574) des Flügelfaltsystems (458) des Flugzeugs (400) entweder in eine Eingriffsposition (540) oder eine Nichteingriffsposition (544) umzuschalten und eine Bewegung des Riegels (572) und der Flügelspitze (456) zu verhindern.

14. Vorrichtung nach einem der Ansprüche 9 bis 13, ferner mit:
der Flügelfaltsteuerung (428), die konfiguriert ist, um, wenn der Status (402) anzeigt, dass ein Ort des Flugzeugs (400) eine andere Position (508) der Flügelspitze (456) erfordert, in Reaktion auf den Empfang des Status (402) eine Warnung zu kommunizieren, wobei der Status (402) anzeigt,
dass die Flügelspitze (456) in der Flugposition (510) ist und das Flugzeug (400) sich auf einer Rollbahn oder an einem Gate befindet oder sich einem Hindernis oder Fahrzeug nähert, von dem die Flügelfaltsteuerung (428) vorhersagt, das es die Flügelspitze (456) berührt, oder sich einer Rollbahn nähert; und
dass die Flügelspitze (456) in der gefalteten Position (514) ist und sich auf einer Start-/Landebahn befindet oder zu einer Start-/Landebahn rollt.

## Revendications

1. Procédé de commande du repliement d'une aile (442), le procédé comprenant :
la réception d'un état (402), d'au moins l'un : d'un avion (400) et d'un système de repliement d'aile (458) compris dans l'avion (400), par un contrôleur de repliement d'aile (428) compris dans l'avion (400) ;
la réception d'une commande (430), par le contrôleur de repliement d'aile (428), en réponse à la réception de l'état (402) ;
la mise en oeuvre du système de repliement d'aile (458), par le contrôleur de repliement d'aile (428), sur la base de la commande (430) et de l'état (402) ; et
la transition, par l'intermédiaire d'un actionneur d'extrémité d'aile (616) compris dans le système de repliement d'aile (458), d'une extrémité d'aile (456) de l'aile (442) comprise dans l'avion (400) vers l'une : d'une position de vol (444) de l'aile (442) et d'une position repliée (446) de l'aile (442), en réponse à la mise en oeuvre du système de repliement d'aile (458) par le contrôleur de repliement d'aile (428) ; **caractérisé en ce que** :
l'état (402) indique que l'avion (400) est sur une voie de circulation ou roule vers une voie de circulation et la commande (430) dirige l'aile (442) vers la position repliée (446) ; et
dans lequel l'état (402) indique que l'avion (400) est sur une piste ou roule vers une piste et la commande (430) dirige l'aile (442) vers la position de vol (444).

2. Procédé selon la revendication 1, comprenant en outre :
l'affichage de l'état (402) du système de repliement d'aile (458) sur un afficheur (418).

3. Procédé selon l'une quelconque des revendications précédentes, comprenant en outre :
la détermination, par l'intermédiaire du contrôleur de repliement d'aile (428), si un verrou (574) du système de repliement d'aile (458) est opérationnel en tentant de déplacer l'extrémité d'aile (456) par l'intermédiaire de l'actionneur d'extrémité d'aile (616) après que le verrou (574) du système de repliement d'aile (458) a été mis dans une position d'engagement (540) ; et
la communication d'un avertissement (460) en réponse à la tentative de déplacement de l'extrémité d'aile (456) après que le verrou (574) a été mis dans la position d'engagement (540).

4. Procédé selon l'une quelconque des revendications précédentes, comprenant en outre :
la détermination, par l'intermédiaire du contrôleur de repliement d'aile (428), que l'état (402) empêche la commande (430) ; et
le fait d'empêcher, par l'intermédiaire du contrôleur de repliement d'aile (428), la transition par l'actionneur d'extrémité d'aile (616) de l'extrémité d'aile (456) lorsque l'état (402) empêche la commande (430).

5. Procédé selon l'une quelconque des revendications précédentes, comprenant en outre :
la transition, par l'intermédiaire d'un actionneur de loquet (576), d'un loquet (572) du système de repliement d'aile (458) de l'avion (400) vers l'une d'une position ouverte (526) et d'une position fermée (530) après que l'extrémité d'aile (456) est passée dans la position de vol (510) .

6. Procédé selon l'une quelconque des revendications précédentes, comprenant en outre :
la transition, par l'intermédiaire d'un actionneur de verrou (576), d'un verrou (574) d'un loquet (572) du système de repliement d'aile (458) de l'avion (400) vers l'une d'une position d'engagement (540) et d'une position de désengagement (544) qui empêche le déplacement du loquet (572) et de l'extrémité d'aile (456).

7. Procédé selon l'une quelconque des revendications précédentes, comprenant en outre :
la communication d'un avertissement (460) en réponse à la réception de l'état (402), lorsque l'état (402) indique qu'un emplacement de l'avion (400) nécessite une position différente de l'extrémité d'aile (456).

8. Procédé selon l'une quelconque des revendications précédentes,
dans lequel l'état (402) indique que l'extrémité d'aile (456) est dans la position de vol (510), et qu'un emplacement de l'avion (400) est soit sur une voie de circulation, soit au niveau d'une porte ; et
dans lequel l'état (402) indique que l'extrémité d'aile (456) est dans la position repliée (514), et que l'emplacement de l'avion (400) est sur une piste.

9. Appareil pour commander un système de repliement d'aile (458) d'une aile (442) d'un avion (400), l'appareil comprenant :
un contrôleur de repliement d'aile (428) configuré pour :
recevoir un état (402) d'au moins l'un : de l'avion (400) et du système de repliement d'aile (458) de l'avion (400) ;
recevoir une commande (430) basée sur la réception de l'état (402) ; et
mettre en oeuvre le système de repliement d'aile (458) de l'avion (400) sur la base de la commande (430) et de l'état (402) ; et
un actionneur d'extrémité d'aile (616) configuré pour faire passer, en réponse au contrôleur de repliement d'aile (428), une extrémité d'aile (456) de l'aile (442) de l'avion (400) dans l'une : d'une position de vol (510) et d'une position repliée (514) ; **caractérisé en ce que** :
l'état (402) indique au moins que l'avion (400) est sur une voie de circulation ou roule vers la voie de circulation, et la commande (430) dirige l'aile (442) vers la position repliée (446) ; et
dans lequel l'état (402) indique au moins que l'avion (400) est sur une piste ou roule vers la piste, et la commande (430) dirige l'aile (442) vers la position de vol (444) .

10. Appareil selon la revendication 9, comprenant en outre :
un afficheur configuré pour afficher l'état du système de repliement d'aile.

11. Appareil selon l'une quelconque de la revendication 9 et de la revendication 10, comprenant en outre :
le contrôleur de repliement d'aile (428) configuré pour : déterminer qu'un verrou (574) du système de repliement d'aile (458) est opérationnel en tentant de déplacer l'extrémité d'aile (456), par l'intermédiaire de l'actionneur d'extrémité d'aile (616), après que le verrou (574) d'un loquet (572) du système de repliement d'aile (458) a été mis dans une position d'engagement (540), et communiquer un avertissement (460) en réponse à la tentative de déplacement de l'extrémité d'aile (456) après que le verrou (574) a été mis dans la position d'engagement (540) .

12. Appareil selon l'une quelconque des revendications 9 à 11, comprenant en outre :
le contrôleur de repliement d'aile (428) configuré pour : déterminer que l'état (402) empêche la commande (430), et empêcher la transition de l'extrémité d'aile (456) lorsque l'état (402) empêche la commande (430).

13. Appareil selon l'une quelconque des revendications 9 à 12, comprenant en outre :
un actionneur de loquet (576) configuré pour faire passer un loquet (572) du système de repliement d'aile (458) de l'avion (400) dans l'une : d'une position ouverte (526) et d'une position fermée (530), après que l'extrémité d'aile (456) est passée dans la position de vol (510) ; et
un actionneur de verrou (576) configuré pour faire passer un verrou (574) du système de repliement d'aile (458) de l'avion (400) dans l'une : d'une position d'engagement (540) et d'une position de désengagement (544), et empêcher le déplacement du loquet (572) et de l'extrémité d'aile (456).

14. Appareil selon l'une quelconque des revendications 9 à 13, comprenant en outre :
le contrôleur de repliement d'aile (428) configuré pour communiquer, lorsque l'état (402) indique qu'un emplacement de l'avion (400) nécessite une position (508) différente de l'extrémité d'aile (456), un avertissement (460) en réponse à la réception de l'état (402), et l'état (402) indique au moins :
que l'extrémité d'aile (456) est dans la position de vol (510), et que l'avion (400) est sur une voie de circulation, est au niveau d'une porte, s'approche d'un quelconque obstacle ou véhicule avec lequel un contact de l'extrémité d'aile (456) est prédit par le contrôleur de repliement d'aile (428), ou s'approche d'une voie de circulation ; et
que l'extrémité d'aile (456) est dans la position repliée (514) et au moins que l'avion est sur une piste ou roule vers une piste.
